(19)

Europäisches
Patentamt
European
Patent Office
Office européen
des brevets

(11) **EP 1 842 578 A2**

(12) **EUROPEAN PATENT APPLICATION**

(43) Date of publication:
**10.10.2007 Bulletin 2007/41**

(51) Int Cl.:
**B01D 46/24** (2006.01)   **C04B 38/00** (2006.01)
**F01N 3/022** (2006.01)

(21) Application number: **07251491.2**

(22) Date of filing: **04.04.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **05.04.2006  JP 2006103895
26.02.2007  JP 2007046251**

(71) Applicant: **NGK INSULATORS, LTD.
Nagoya-City, Aichi Pref.  467-8530 (JP)**

(72) Inventors:
• **Miyairi, Yukio
Nagoya-City
Aichi-ken 467-8530 (JP)**

• **Noguchi, Yasushi
Nagoya-City
Aichi-ken 467-8530 (JP)**
• **Nakane, Yukari
Nagoya-City
Aichi-ken 467-8530 (JP)**

(74) Representative: **Paget, Hugh Charles Edward et al
Mewburn Ellis LLP
York House
23 Kingsway
London WC2B 6HP (GB)**

(54) **Honeycomb filter**

(57)   There is disclosed a honeycomb filter capable of minimizing an initial pressure loss during an exhaust gas treatment in a state in which a high efficiency is maintained in trapping particulate matters included in an exhaust gas. In the honeycomb filter which includes porous partition walls to define and form a plurality of cells constituting channels of a fluid and in which the predetermined cells each opened at one end thereof and plugged at the other end thereof and the remaining cells each plugged at one end thereof and opened at the other end thereof are alternately arranged, an average pore diameter of the partition walls is in a range of 8 to 18 μm, and a standard deviation in terms of common logarithm in pore diameter distribution, when pore diameters are expressed in terms of common logarithm, is in a range of 0.2 to 0.5.

**EP 1 842 578 A2**

**Description**

BACKGROUND OF THE INVENTION

1. Field of the Invention

The present invention relates to a honeycomb filter. The present invention more particularly relates to a honeycomb filter capable of minimizing an initial pressure loss during an exhaust gas treatment in a state in which a high efficiency is maintained in trapping particulate matters included in an exhaust gas.

2. Description of the Related Art

In consideration of influences on environments, there is a rising necessity to remove, from an exhaust gas, particulate matters and harmful substances included in the exhaust gas discharged from combustion devices including internal combustion engines such as an engine for a car, an engine for a construction machine and a fixed engine for an industrial machine. Especially, regulations with regard to removal of the particulate matters (hereinafter sometimes referred to as the "PMs") discharged from a diesel engine tend to be tightened globally, use of a honeycomb filter as a trapping filter (a diesel particulate filter hereinafter sometimes referred to as the "DPF") for removing the PMs attracts attentions, and various systems are proposed. The DPF usually includes porous partition walls which define and form a plurality of cells constituting channels of a fluid. The predetermined cells each opened at one end thereof and plugged at the other end thereof (the predetermined cells) and the remaining cells each plugged at one end thereof and opened at the other end thereof (the remaining cells) are alternately arranged. The fluid (an exhaust gas) which has entered the filter from one end of the filter where the predetermined cells are opened is passed through the partition wall and discharged as the passed fluid into the remaining cells. The passed fluid is discharged from the other end of the filter where the remaining cells are opened. In consequence, the PMs included in the exhaust gas are trapped and removed.
As described above, in a wall flow type filter such as the DPF having a structure in which the exhaust gas passes through the porous partition walls, since a large filter area is obtained, a filter flow rate (a flow rate of the fluid to be passed through the partition walls) can be lowered. The filter has a small pressure loss and a comparatively satisfactory particulate matter trapping efficiency.
Usually in the DPF, when an average pore diameter of the partition walls of the filter is reduced, the particulate matter trapping efficiency can be increased. For example, a porous ceramic honeycomb filter is disclosed in which a ratio of pores having a pore diameter of 100 $\mu$m or more is set to 10% or less of the whole ratio to thereby increase the trapping efficiency (see, e.g., Patent Document 1).
Moreover, it is known that, when a distribution of the pore diameters of the partition walls of the DPF is a sharp distribution having a small distribution width, a satisfactory trapping characteristic is obtained (see, e.g., Patent Document 2).

[Patent Document 1] Japanese Patent No. 2726616;

and

[Patent Document 2] Japanese Patent No. 3272746.

As described above, when the efficiency in trapping the particulate matters from the exhaust gas is noted, it is preferable that the partition walls have small pore diameters and a narrow pore diameter distribution. On the other hand, when the pressure loss is noted, the pore diameter usually requires a certain degree of size. Moreover, the above conventional technology produces a constant effect on the trapping efficiency, but does not sufficiently minimize the pressure loss. Especially, the pressure loss is large in an initial state of an operation before particulate matters are deposited on the DPF.

SUMMARY OF THE INVENTION

The present invention has been developed in view of such conventional technical problems, and an object of the present invention is to provide a honeycomb filter capable of minimizing an initial pressure loss during an exhaust gas treatment in a state in which a high efficiency is maintained in trapping particulate matters from an exhaust gas.
The present invention provides the following honeycomb filters.
[1] A honeycomb filter (a first invention) which comprises porous partition walls to define and form a plurality of cells constituting channels of a fluid and in which the predetermined cells each opened at one end thereof and plugged at the other end thereof and the remaining cells each plugged at one end thereof and opened at the other end thereof are alternately arranged, wherein an average pore diameter of the partition walls is in a range of 8 to 18 $\mu$m, and a standard deviation in terms of common logarithm in pore diameter distribution, when pore diameters are expressed in terms of common logarithm, is in a range of 0.2 to 0.5.

[2] The honeycomb filter according to [1], wherein the average pore diameter is in a range of 10 to 16 $\mu$m, and the standard deviation in terms of common logarithm is in a range of 0.2 to 0.5.

[3] The honeycomb filter according to [1] or [2], wherein a material constituting the partition walls is at least one selected from the group consisting of cordierite, silicon carbide, sialon, mullite, silicon nitride, zirconium phosphate, zirconia, titania, alumina and silica.

[4] A honeycomb filter (a second invention) which comprises porous partition walls to define and form a plurality of cells constituting channels of a fluid and in which the predetermined cells each opened at one end thereof and plugged at the other end thereof and the remaining cells each plugged at one end thereof and opened at the other end thereof are alternately arranged, wherein a thickness of each of the partition walls exceeds 20 $\mu$m, the partition wall is constituted of two layers, one (a trapping layer) of the layers has a thickness of 20 $\mu$m or more, an average pore diameter of the trapping layers is in a range of 8 to 18 $\mu$m, and a standard deviation in terms of common logarithm in pore diameter distribution, when pore diameters are expressed in terms of common logarithm, is in a range of 0.2 to 0.5.

[5] The honeycomb filter according to [4], wherein the other layer (a support layer) of the partition wall has an average pore diameter of 20 $\mu$m or more.

According to the honeycomb filter of the present invention, since the average pore diameter of the partition walls is 8 to 18 $\mu$m and the standard deviation in terms of common logarithm in pore diameter distribution, when pore diameters are expressed in terms of common logarithm, is 0.2 to 0.5, the initial pressure loss during the exhaust gas treatment can be minimized in a state in which the high efficiency is maintained in trapping the particulate matters.

BRIEF DESCRIPTION OF THE DRAWINGS

FIG. 1 is a graph showing a relation between a common logarithm standard deviation and an initial pressure loss in Examples 1 to 3 and Comparative Example 1;
FIG. 2 is a graph showing a relation between an average pore diameter and a trapping efficiency in Examples 4 to 7 and Comparative Examples 2 to 4; and
FIG. 3 is a graph showing a relation between a common logarithm standard deviation and a trapping efficiency in Examples 1 to 3 and Comparative Examples 5, 6.

DESCRIPTION OF THE PREFERRED EMBODIMENT

The best mode for carrying out the present invention will hereinafter be described, but it should be understood that the present invention is not limited to the following embodiment and that design is appropriately modified or improved based on ordinary knowledge of any person skilled in the art without departing from the scope of the present invention.
One embodiment of a honeycomb filter (a first invention) according to the present invention is a honeycomb filter which comprises porous partition walls to define and form a plurality of cells constituting channels of a fluid and in which the predetermined cells each opened at one end thereof and plugged at the other end thereof (the predetermined cells) and the remaining cells plugged at one end thereof and opened at the other end thereof (the remaining cells) are alternately arranged. An average pore diameter of the partition walls is in a range of 8 to 18 $\mu$m, and a standard deviation in terms of common logarithm in pore diameter distribution, when pore diameters are expressed in terms of common logarithm, is in a range of 0.2 to 0.5. During use of the honeycomb filter according to the present embodiment, the fluid (an exhaust gas or the like) which has entered the filter from one end of the filter where the predetermined cells are opened is passed through the partition walls and discharged as the passed fluid into the remaining cells. The passed fluid can be discharged from the other end of the filter where the remaining cells are opened. In consequence, the partition walls can trap particulate matters contained in the exhaust gas or the like.

The average pore diameter of the partition walls of the honeycomb filter according to the present embodiment is 8 to 18 $\mu$m, preferably 10 to 16 $\mu$m, further preferably 10 to 13 $\mu$m. When the average pore diameter of the partition walls is set to such a range, it is possible to increase a PM trapping efficiency while minimizing a pressure loss. It is not preferable that the average pore diameter is smaller than 8 $\mu$m, because the pressure loss increases. It is not preferable that the average pore diameter exceeds 18 $\mu$m, because the PM trapping efficiency drops.

The average pore diameter is a value measured by a mercury porosimetry process. Specifically, the average pore diameter may be measured with Porosimeter (the trade name), Model 9810 manufactured by Shimadzu Corp.

The standard deviation in terms of common logarithm in pore diameter distribution, when pore diameters are expressed in terms of common logarithm, of the partition walls of the honeycomb filter according to the present embodiment (the standard deviation in terms of common logarithm) is 0.2 to 0.5, preferably 0.3 to 0.45, further preferably 0.35 to 0.4. When the standard deviation in terms of common logarithm in pore diameter distribution of the partition walls is set to such a range, it is possible to minimize an initial pressure loss before PMs are deposited on the honeycomb filter of the present embodiment, while maintaining a purification performance during an exhaust gas treatment operation. Reasons for this are as follows. That is, when the filter has a larger standard deviation and a broader distribution region of the pore diameters, a maximum pore diameter and a ratio occupied by large pores increase. Moreover, when the ratio of the large pores increases, the gas having a high flow rate can selectively flow through the large pores with less pressure loss. Therefore, the initial pressure loss drops. On the other hand, when the filter has a large standard deviation and a broad pore diameter distribution and the large pores are present, a contact area between the gas and the filter decreases. Therefore, the purification performance deteriorates. The above range is preferable as a range in which both of such contradicting factors can be satisfied, that is, the pressure loss can be reduced while maintaining the purification performance. Moreover, when this range is combined with the above range of the average pore diameter of the partition walls, it is possible to further effectively minimize the initial pressure loss during the exhaust gas treatment in a state in which a high PM trapping efficiency (the purification performance) is maintained. It is not preferable that the standard deviation in terms of common logarithm is smaller than 0.2, because the initial pressure loss cannot be minimized. It is not preferable that the standard deviation in terms of common logarithm is larger than 0.5, because the PM trapping efficiency drops.

The pore diameter distribution of the pores of the partition walls is a value measured by a mercury porosimetry process, and may be measured with, for example, Porosimeter (the trade name), Model 9810 manufactured by Shimadzu Corp. Moreover, the standard deviation in terms of common logarithm can be calculated by indicating each pore diameter of the resultant pore diameter distribution in terms of common logarithm and obtaining a standard deviation from the pore diameter distribution indicated in terms of common logarithm. Specifically, the standard deviation in terms of common logarithm (sd; standard deviation in the following equation (4)) of the resultant pore diameter distribution is obtained using the following equations (1) to (4). It is to be noted that as a differential pore volume denoted with "f" in the following equations (2), (3), for example, assuming that a pore volume (a cumulative value of pore diameters 0 to Dp1) of pores having a diameter which is not more than a pore diameter Dp1 is V1 and a pore volume (a cumulative value of pore diameters 0 to Dp2) of pores having a diameter which is not more than a pore diameter Dp2 is V2, a differential pore volume f2 is a value represented by f2 = V2-V1. In the following equations (1) to (4), "Dp" is a pore diameter ($\mu$m), "f" is a differentia pore volume (mL/g), "x" is a common logarithm of a pore diameter Dp, "xav" is an average value of x, "s$^2$" is a variance of x and "sd" is a standard deviation (the standard deviation in terms of common logarithm in pore diameter distribution) of x, respectively.

[Eq. 1]

$$x = \log Dp \tag{1}$$

$$xav = \sum xf / \sum f \tag{2}$$

$$s^2 = \sum x^2 f / \sum f - xav^2 \tag{3}$$

$$sd = \sqrt{s^2} \tag{4}$$

In the honeycomb filter of the present embodiment, there is not any special restriction on a material of the porous partition wall, but it is preferable that the material is at least one selected from the group consisting of cordierite, silicon carbide, sialon, mullite, silicon nitride, zirconium phosphate, zirconia, titania, alumina and silica.

In the honeycomb filter of the present embodiment, there is not any special restriction on a thickness of the partition wall. However, if this thickness of the partition wall is excessively large, the pressure loss during the passage of the fluid sometimes increases. If the thickness is excessively small, strength sometimes falls short. The thickness of the partition wall is preferably 100 to 1000 $\mu$m, further preferably 200 to 800 $\mu$m. The honeycomb filter of the present embodiment may have an outer peripheral wall positioned at an outermost periphery of the filter. It is to be noted that the outer peripheral wall may be not only an integrally formed wall formed integrally with the honeycomb filter during the forming but also a wall coated with cement obtained by grinding an outer periphery of the formed honeycomb filter to form the filter into a predetermined shape and forming the outer peripheral wall with cement or the like.

There is not any special restriction on a porosity of the porous partition wall constituting the honeycomb filter of the present embodiment, but the porosity is, for example, preferably 20% or more, further preferably 40 to 70%, especially preferably 60 to 65%. It is to be noted that the porosity is volume %, and is a value measured with a mercury porosimeter.

There is not any special restriction on a cell density of the honeycomb filter of the present embodiment, but the cell density is preferably 12 to 93 cells/cm$^2$, further preferably 14 to 62 cells/cm$^2$, especially preferably 15 to 50 cells/cm$^2$.

In the honeycomb filter of the present embodiment, there is not any special restriction on the whole shape of the filter, but examples of the shape include a cylindrical shape, a square pole shape, a triangular pole shape and a square rod shape. There is not any special restriction on a cell shape of the honeycomb filter (a cell shape in a section vertical to a direction (a cell extending direction) in which a central axis of the honeycomb filter extends), and examples of the shape include a quadrangular shape, a hexagonal shape and a triangular shape.

In the honeycomb filter of the present embodiment, it is preferable to carry a catalyst on the partition walls. Moreover, it is further preferable that this catalyst is a catalyst which oxidizes the PMs. When the catalyst is carried, it is possible to promote oxidation and removal of the PMs attached to the partition walls. Examples of the catalyst which oxidizes the PMs include noble metals such as Pt and Pd. It is preferable that as a promoter, an oxide such as ceria or zirconia having an oxygen occlusion property is carried together with the catalyst.

In the honeycomb filter of the present embodiment, there is not any special restriction on a material of a plugging member which plugs the cells, but it is preferable that the material is at least one selected from the above group of the examples of the material of the partition walls of the honeycomb filter.

One embodiment of a honeycomb filter (a second invention) of the present invention is a honeycomb filter which comprises porous partition walls to define and form a plurality of cells constituting channels of a fluid and in which the predetermined cells each opened at one end thereof and plugged at the other end thereof and the remaining cells each plugged at one end thereof and opened at the other end thereof are alternately arranged. A thickness of each of the partition walls exceeds 20 $\mu$m, the partition wall is constituted of two layers, one (a trapping layer) of the layers has a thickness of 20 $\mu$m or more, an average pore diameter of the trapping layers is in a range of 8 to 18 $\mu$m, and a standard deviation in terms of common logarithm in pore diameter distribution, when pore diameters are expressed in terms of common logarithm, is in a range of 0.2 to 0.5. It is preferable that the "trapping layer" of the honeycomb filter of the present embodiment has the same constitution as that of the "partition wall" of the first invention except that the thickness of the layer is 20 $\mu$m or more. Therefore, an average pore diameter and a standard deviation in terms of common logarithm of the trapping layer have conditions similar to those of the "partition wall" of the first invention. It is preferable that the honeycomb filter of the present embodiment has the same constitution as that of the first invention except a thickness and a pore diameter of each partition wall.

A thickness of the trapping layer which is one of the layers constituting the partition wall is 20 $\mu$m or more, preferably 20 to 200 $\mu$m, further preferably 20 to 50 $\mu$m. When the layer has a thickness of 20 $\mu$m or more, a high trapping efficiency can be maintained. It is not preferable that the thickness is less than 20 $\mu$m, because the trapping efficiency drops.

Moreover, the thickness of the whole partition wall is above 20 $\mu$m, preferably "above 20 $\mu$m, 1000 $\mu$m or less", further preferably 100 to 1000 $\mu$m, especially preferably 200 to 800 $\mu$m.

The average pore diameter of a support layer which is the other layer constituting the partition wall is preferably 20 $\mu$m or more, further preferably 20 to 300 $\mu$m, especially preferably 20 to 100 $\mu$m. When the average pore diameter of the support layer is set to 20 $\mu$m or more, an increase of a pressure loss can be suppressed while retaining strength of the partition wall.

Next, a method of manufacturing one embodiment of the honeycomb filter (the first invention) according to the present invention will be described. The honeycomb filter of the present embodiment may be manufactured by, for example, the following method, but the method of manufacturing the honeycomb filter of the present embodiment is not limited to the following method.

First, a clay for forming the honeycomb filter is formed. That is, the above examples of the materials of the honeycomb filter are used as raw materials, and the materials are mixed and kneaded to form the clay. For example, when cordierite is used as the material of the partition walls, a dispersion medium such as water and a pore former are added to a cordierite forming material, an organic binder and a dispersant are further added to knead the materials, and the clay is formed. Here, the cordierite forming material is a material forming cordierite when fired, and is a ceramic material blended so as to obtain a chemical composition in a range of 42 to 56 mass% of silica, 30 to 45 mass% of alumina and 12 to 16 mass% of magnesia. Specific examples of the cordierite forming material include a material containing a plurality of inorganic materials selected from the group consisting of talc, kaolin, tentatively fired kaolin, alumina, aluminum hydroxide and silica at such a ratio as to obtain the above chemical composition.

Each material contained in the cordierite forming material for manufacturing the honeycomb filter of the present embodiment has a particle size (V50) ($\mu$m) at 50 vol% in a volume particle size distribution in a range of preferably 1 to 25 $\mu$m, further preferably 5 to 20 $\mu$m. Furthermore, a value (a volume particle size distribution ratio: [Vall90]/[Vall10]) of a ratio of a particle size (Vall90) ($\mu$m) at 90 vol% to a particle size (Vall10) ($\mu$m) at 10 vol% in the volume particle size distribution of the whole cordierite forming material is preferably 15 or more, further preferably 5 to 10. When the materials having such a particle size distribution are used, the average pore diameter of the partition walls of the resultant honeycomb filter according to the present embodiment can be set to 8 to 18 $\mu$m, and a standard deviation in terms of common logarithm in pore diameter distribution, when pore diameters are expressed in terms of common logarithm, may be set to 0.2 to 0.5. It is to be noted that the particle size distribution of the materials is a value measured using the Stokes' liquid phase precipitation law as a measurement principle and using an X-ray transmission type particle size distribution measurement device in which the distribution is detected by an X-ray transmission process. Specifically, the value may be measured using, for example, Sedigraph (the trade name), Model 5000-02 manufactured by Shimadzu Corp.

The pore former may have such a property as to fly, scatter and disappear by a firing step. As the pore former, an inorganic substance such as a coke, a high molecular compound such as a foaming resin, an organic substance such as starch and the like may be used alone or as a combination of them.

As the organic binder, hydroxypropyl methyl cellulose, methyl cellulose, hydroxyethyl cellulose, carboxyl methyl cellulose, polyvinyl alcohol or the like may be used. They may be used alone or as a combination of two or more of them.

As the dispersant, ethylene glycol, dextrin, fatty acid soap, polyalcohol or the like may be used. They may be used alone or as a combination of two or more of them.

There is not any special restriction on a method of kneading the cordierite forming material (a forming material) to prepare the clay, and examples of the method include methods in which a kneader and a vacuum clay kneader are used.

Next, the resultant clay is formed into a honeycomb shape to prepare a formed honeycomb body. There is not any special restriction on a method of preparing the formed honeycomb body, and a heretofore known method such as extruding, injecting or pressing may be used. Above all, preferable examples of the method include a method of extruding the clay prepared as described above by use of a die having a desired cell shape, a desired partition wall thickness and a desired cell density.

Next, it is preferable that opposite ends of the resultant formed honeycomb body are plugged. There is not any special restriction on a plugging method, but, for example, one end surface is first masked in the form of a checkered pattern so that openings of the cells are alternately closed. A plugging slurry including the cordierite forming material, water or alcohol and the organic binder is stored beforehand in a storage vessel. The end of the body on a masked side is immersed into the storage vessel, and openings of the cells which are not masked are filled with the plugging slurry to form plugging portions. At the other end of the body, the cells each plugged at one end thereof are masked, and plugging portions are formed in a method similar to the method of forming the plugging portions at the one end of the body. In consequence, the cells each of which is not plugged at one end thereof are plugged at the other end thereof, and the other end of the body also has a structure in which the cells are alternately closed in the form of the checkered pattern.

Next, it is preferable that the plugged formed honeycomb body is dried to prepare a dried honeycomb body. There is not any special restriction on a drying method, and a heretofore known drying method such as hot-air drying, microwave drying, dielectric drying, reduced pressure drying, vacuum drying or freeze-drying may be used. Above all, a drying method constituted by combining the hot air drying with the microwave drying or the dielectric drying is preferable, because the whole formed body can quickly and uniformly be dried.

Next, it is preferable that the resultant dried honeycomb body is tentatively fired to prepare a tentatively fired body before final firing. The "tentative firing" is an operation to burn and remove organic matters (the organic binder, the dispersant, the pore former, etc.) included in the formed honeycomb body. In general, since a burning temperature of the organic binder is about 100 to 300°C and a burning temperature of the pore former is about 200 to 800°C, a tentative firing temperature may be set to about 200 to 1000°C. There is not any special restriction on a tentative firing time, but the time is usually about ten to 100 hours.

Next, the resultant tentatively fired body is fired (finally fired) to thereby obtain a honeycomb filter of the present embodiment. In the present invention, the "final firing" is an operation of sintering and densifying the forming material included in the tentatively fired body to secure predetermined strength. Since firing conditions (temperature, time) differ with a type of forming material, appropriate conditions may be selected in accordance with the type, but it is preferable to fire a cordierite material at 1410 to 1440°C. It is preferable to fire the material for about three to ten hours.

Next, a method of manufacturing one embodiment of the honeycomb filter (the second invention) according to the present invention will be described. The honeycomb filter of the present embodiment may be manufactured in the same manner as in the method of manufacturing one embodiment of the above "first invention" except that the partition wall is constituted of two layers and each layer is formed on specific conditions of the average pore diameter.

To prepare the honeycomb filter of the present embodiment, first a honeycomb filter is prepared by the method of the first invention. Moreover, a slurry for forming the trapping layer is prepared using the same type of material as that used in preparing the formed honeycomb body during the manufacturing of the honeycomb filter of the first invention, but the material has a smaller particle diameter. Moreover, the surface of the partition wall (the support layer) of the above honeycomb filter is coated with the slurry, and the filter is dried and fired to form a coating layer (the trapping layer), thereby obtaining the honeycomb filter of the present embodiment.
A particle size (V50) ($\mu$m) at 50 vol% in a volume particle size distribution of pore diameters of materials for use in preparing the above slurry is preferably 0.5 to 10 $\mu$m, further preferably 1 to 10 $\mu$m. Furthermore, in a volume particle size distribution of the whole cordierite material, a value of a ratio (the volume particle size distribution ratio: [Vall90]/[Vall10]) of a particle size (Vall90) at 90 vol% to a particle size (Vall10) ($\mu$m) at 10 vol% is preferably 15 or less, further preferably 5 to 10. A method of coating the surface with the slurry was performed by immersing one end surface of a plugged honeycomb structure into a slurry liquid to suck the liquid. The thickness of the trapping layer is controlled by controlling the number of times when the slurry suction and the drying are repeated. Conditions that the slurry with which the surface of the partition wall has been coated is dried are preferably 130 to 200°C for a purpose of evaporating a water or alcohol component. It is preferable to perform the hot air drying. During the firing after the drying, it is preferable to perform the tentative firing and the final firing, but the final firing only may be performed. In general, since the burning temperature of the organic binder is about 100 to 300°C and the burning temperature of the pore former is about 200 to 800°C, it is preferable that the tentative firing temperature is set to about 200 to 1000°C. As conditions of the final firing, when the cordierite forming material is used, it is preferable that the material is fired at 1390 to 1430°C for about three to ten hours.

[Examples]

The present invention will hereinafter be described more specifically in accordance with examples, but the present invention is not limited to these examples.

(Example 1)
As cordierite forming materials, alumina, alumina hydroxide, kaolin, talc and silica were used. Each of the materials in which a particle size (V50) ($\mu$m) at 50 vol% was 10 $\mu$m in each volume particle size distribution was used. As the whole cordierite forming materials, in the volume particle size distribution of the whole cordierite forming material, the particle size distributions of the materials were adjusted so that a value of a ratio (a volume particle size distribution ratio: [Vall90]/[Vall10]) of a particle size (Vall90) ($\mu$m) at 90 vol% to a particle size (Vall10) ($\mu$m) at 10 vol% was 7.

To 100 parts by mass of the cordierite forming material, 35 parts by mass of water as a dispersion medium, 6 parts by mass of organic binder and 0.5 part by mass of dispersant were added, mixed and kneaded to prepare a clay.

A coke was used as a pore former, hydroxypropyl methyl cellulose was used as an organic binder and ethylene glycol was used as a dispersant. The pore former having an average pore diameter of 10 $\mu$m was used.

The resultant clay was extruded to prepare a formed honeycomb body having a quadrangular cell section and the whole cylindrical shape. Furthermore, the formed honeycomb body was dried with a microwave drier, and completely dried with a hot air drier. Next, opposite end surfaces of the formed honeycomb body were cut into predetermined dimensions.

Next, the resultant formed honeycomb body was plugged. One end surface of the resultant formed honeycomb body was masked so as to alternately close cell openings in the form of a checkered pattern, and an end of the body on a masked side was immersed into a plugging slurry containing the cordierite forming material to prepare plugging portions alternately arranged in the form of the checkered pattern. Furthermore, at the other end of the body, the cells each plugged at one end thereof were masked to form plugging portions by a method similar to that of forming the plugging portions at the one end of the body.

Next, the plugged formed honeycomb body was dried with the hot air drier.

Next, the plugged formed honeycomb body was fired to obtain a honeycomb filter (Example 1). Firing conditions were set to 1410 to 1440°C and five hours.

The resultant honeycomb filter had a cylindrical shape having a diameter of 144 mm and a length of 152 mm. A thickness of each partition wall was 0.305 mm, and a cell density was 46.5 cells/cm$^2$.

An average pore diameter and a common logarithm standard deviation of a pore diameter distribution of the resultant honeycomb filter were measured by the following method. Resultant results are shown in Table 1.

Moreover, an initial trapping efficiency (the trapping efficiency) and an initial pressure loss during an exhaust gas treatment were measured by the following methods. Results are shown in Table 1.

(Average pore diameter)
The average pore diameter was measured using Porosimeter (the trade name), Model 9810 manufactured by Shimadzu Corp.

(Standard deviation in terms of common logarithm)
Pore diameters were measured using Porosimeter (the trade name), Model 9810 manufactured by Shimadzu Corp. to derive a pore diameter distribution, values of the pore diameters were represented by common logarithms, and a standard deviation in pore diameter distribution (the standard deviation in terms of common logarithm) was calculated.

(Initial trapping efficiency (trapping efficiency))
An exhaust gas was passed into the honeycomb filter from a light oil burner on conditions that a soot (particulate matters) concentration was 1 mg/m$^3$, an exhaust gas temperature was 200°C and an exhaust gas flow rate was 2.4 Nm$^3$/min, and the numbers of soot particles on upstream (before the gas entered the honeycomb filter) and downstream (after the gas was discharged from the honeycomb filter) sides were measured in an initial state before soot was deposited on the honeycomb filter. Moreover, the trapping efficiency was calculated by an equation "100x((the number of the upstream soot particles)-(the number of the downstream soot particles))/(the number of the upstream soot particles)". The number of the soot particles was measured by counting the soot particles by use of Scanning Mobility Analyzer (SMPS) manufactured by TSI Corporation. The initial trapping efficiency was evaluated as successful, when it was 80% or more.

(Initial pressure loss)
When air at normal temperature was passed at 8 Nm$^3$/min, a pressure difference of the honeycomb filter between the upstream and the downstream was performed with a differential pressure gauge. The initial pressure loss was evaluated as successful, when it was 3.5 kPa or less.

[Table 1]

| | Average pore diameter ($\mu$m) | Standard deviation in terms of common logarithm | Trapping efficiency (%) | Initial pressure loss (kPa) |
|---|---|---|---|---|
| Example 1 | 13 | 0.25 | 85 | 3.0 |
| Example 2 | 13 | 0.30 | 85 | 2.8 |
| Example 3 | 13 | 0.45 | 85 | 2.7 |
| Example 4 | 8 | 0.35 | 92 | 3.2 |
| Example 5 | 12 | 0.35 | 88 | 2.8 |
| Example 6 | 11 | 0.35 | 90 | 2.6 |
| Example 7 | 17 | 0.35 | 82 | 2.5 |

(continued)

|  | Average pore diameter ($\mu$m) | Standard deviation in terms of common logarithm | Trapping efficiency (%) | Initial pressure loss (kPa) |
|---|---|---|---|---|
| Comparative Example 1 | 13 | 0.19 | 85 | 4.7 |
| Comparative Example 2 | 20 | 0.35 | 60 | 2.4 |
| Comparative Example 3 | 23 | 0.35 | 55 | 2.4 |
| Comparative Example 4 | 25 | 0.35 | 45 | 2.3 |
| Comparative Example 5 | 13 | 0.55 | 60 | 2.7 |
| Comparative Example 6 | 13 | 0.60 | 45 | 2.7 |

(Example 2)
A honeycomb filter (Example 2) was prepared in the same manner as in Example 1 except that a particle diameter distribution of a pore former, an amount of the pore former to be blended and a particle diameter distribution of a cordierite forming material were appropriately controlled to thereby set a standard deviation in terms of common logarithm to 0.3. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Example 3)
A honeycomb filter (Example 3) was prepared in the same manner as in Example 1 except that a particle diameter distribution of a pore former, an amount of the pore former to be blended and a particle diameter distribution of a cordierite forming material were appropriately controlled to thereby set a standard deviation in terms of common logarithm to 0.45. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Example 4)
A honeycomb filter (Example 4) was prepared in the same manner as in Example 1 except that a particle diameter distribution of a pore former, an amount of the pore former to be blended and a particle diameter distribution of a cordierite forming material were appropriately controlled to thereby set an average pore diameter to 8 $\mu$m and set a standard deviation in terms of common logarithm to 0.35. The average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Example 5)
A honeycomb filter (Example 5) was prepared in the same manner as in Example 4 except that a particle diameter distribution of a pore former, an amount of the pore former to be blended and a particle diameter distribution of a cordierite forming material were appropriately controlled to thereby set an average pore diameter to 12 $\mu$m. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Example 6)
A honeycomb filter (Example 6) was prepared in the same manner as in Example 4 except that a particle diameter distribution of a pore former, an amount of the pore former to be blended and a particle diameter distribution of a cordierite forming material were appropriately controlled to thereby set an average pore diameter to 11 $\mu$m. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Example 7)

A honeycomb filter (Example 7) was prepared in the same manner as in Example 4 except that a particle diameter distribution of a pore former, an amount of the pore former to be blended and a particle diameter distribution of a cordierite forming material were appropriately controlled to thereby set an average pore diameter to 17 μm. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Comparative Example 1)

A honeycomb filter (Comparative Example 1) was prepared in the same manner as in Example 1 except that a particle diameter distribution of a pore former, an amount of the pore former to be blended and a particle diameter distribution of a cordierite forming material were appropriately controlled to thereby set a standard deviation in terms of common logarithm to 0.19. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Comparative Example 2)

A honeycomb filter (Comparative Example 2) was prepared in the same manner as in Example 4 except that a particle diameter distribution of a pore former, an amount of the pore former to be blended and a particle diameter distribution of a cordierite forming material were appropriately controlled to thereby set an average pore diameter to 20 μm. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Comparative Example 3)

A honeycomb filter (Comparative Example 3) was prepared in the same manner as in Example 4 except that a particle diameter distribution of a pore former, an amount of the pore former to be blended and a particle diameter distribution of a cordierite forming material were appropriately controlled to thereby set an average pore diameter to 23 μm. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Comparative Example 4)

A honeycomb filter (Comparative Example 4) was prepared in the same manner as in Example 4 except that a particle diameter distribution of a pore former, an amount of the pore former to be blended and a particle diameter distribution of a cordierite forming material were appropriately controlled to thereby set an average pore diameter to 25 μm. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Comparative Example 5)

A honeycomb filter (Comparative Example 5) was prepared in the same manner as in Example 1 except that a particle diameter distribution of a pore former, an amount of the pore former to be blended and a particle diameter distribution of a cordierite forming material were appropriately controlled to thereby set a standard deviation in terms of common logarithm to 0.55. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

(Comparative Example 6)

A honeycomb filter (Comparative Example 6) was prepared in the same manner as in Example 1 except that a particle diameter distribution of a pore former, an amount of the pore former to be blended and a particle diameter distribution of a cordierite forming material were appropriately controlled to thereby set a standard deviation in terms of common logarithm to 0.60. An average pore diameter and a standard deviation in terms of common logarithm in pore diameter distribution were measured, and an initial trapping efficiency (the trapping efficiency) and an initial pressure loss during an exhaust gas treatment were measured in the same manner as in Example 1. Results are shown in Table 1.

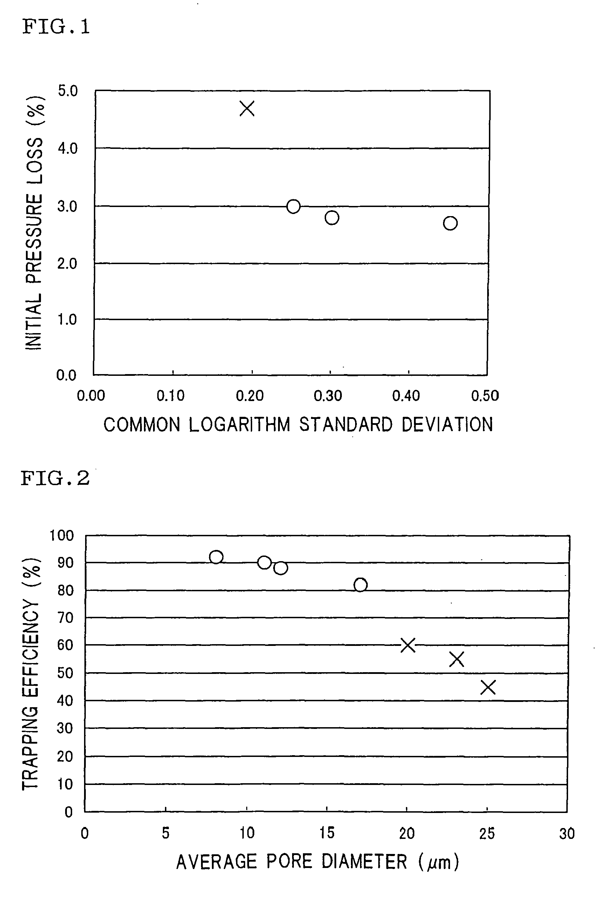

It is seen from Table 1 and FIG. 1 that since the honeycomb filters of Examples 1 to 3 have the standard deviation in terms of common logarithm in pore diameter distribution in a range of 0.2 to 0.5, the initial pressure loss indicates a small value of 3.0 kPa or less. On the other hand, it is seen that since the honeycomb filter of Comparative Example 1 has a standard deviation in terms of common logarithm indicating an excessively small value of 0.19, the initial pressure loss indicates a large value of 4.7 kPa. Here, FIG. 1 is a graph showing a relation between the standard deviation in terms of common logarithm and the initial pressure loss in Examples 1 to 3 and Comparative Example 1. Results of Examples 1 to 3 are shown by "○", and a result of Comparative Example 1 is shown by "×".

Moreover, it is seen from Table 1 and FIG. 2 that since the honeycomb filters of Examples 4 to 7 have the average pore diameter in a range of 8 to 18 μm, the trapping efficiency indicates a large value of 82% or more. On the other hand, it is seen that since the honeycomb filters of Comparative Examples 2 to 4 have an average pore diameter in excess of 18 μm, the trapping efficiency indicates a low value of 60% or less. Here, FIG. 2 is a graph showing a relation between the average pore diameter and the trapping efficiency in Examples 4 to 7 and Comparative Examples 2 to 4. Results of Examples 4 to 7 are shown by "○", and results of Comparative Examples 2 to 4 are shown by "×".

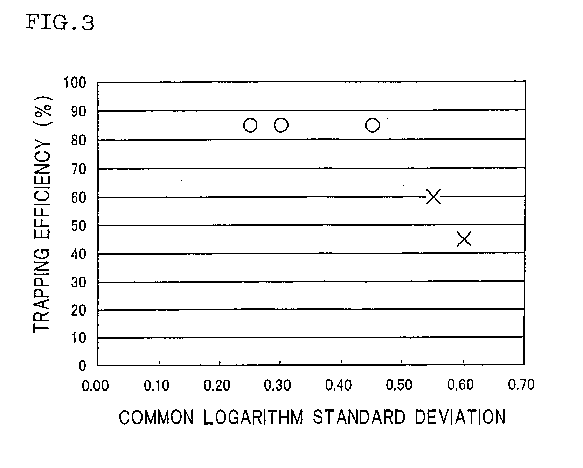

Furthermore, it is seen from Table 1 and FIG. 3 that since the honeycomb filters of Examples 1 to 3 have the standard deviation in terms of common logarithm in pore diameter distribution in a range of 0.2 to 0.5, the trapping efficiency indicates a large value of 82% or more. On the other hand, it is seen that since the honeycomb filters of Comparative Examples 5, 6 have a standard deviation in terms of common logarithm indicating a large value above 0.5, the trapping efficiency indicates a small value of 60% or less. Here, FIG. 3 is a graph showing a relation between the standard deviation in terms of common logarithm and the trapping efficiency in Examples 1 to 3 and Comparative Examples 5, 6. Results of Examples 1 to 3 are shown by "○", and results of Comparative Examples 5, 6 are shown by "×".

(Example 8)

After preparing a honeycomb filter (Example 1) by a method similar to that of Example 1, a material used as a material of a formed honeycomb body in Example 1 and having a small average particle diameter was formed into a slurry, and the surface of each partition wall (a support layer) was coated with the slurry, dried and fired to form a coating layer (a trapping layer), thereby preparing a honeycomb filter (Example 8). A particle diameter distribution of a pore former contained in the slurry, an amount of the pore former to be blended and a particle diameter distribution of a cordierite forming material were appropriately controlled to thereby adjust an average pore diameter. Firing conditions were set to 1390 to 1430°C and five hours. The surface was coated with the slurry by a method of immersing one end surface of a plugged honeycomb structure into a slurry liquid to suck the liquid. A thickness of the trapping layer was controlled by controlling the number of times when the slurry suction and the drying were repeated. The average pore diameter and an initial trapping efficiency (the trapping efficiency) during an exhaust gas treatment were measured in the same manner as in Example 1. Results are shown in Table 2.

[Table 2]

| | Trapping layer thickness (μm) | Support layer thickness (μm) | Trapping layer average pore diameter (μm) | Support layer average pore diameter (μm) | Trapping efficiency (%) |
|---|---|---|---|---|---|
| Comparative Example 7 | 0 | 300 | 10 | 30 | 30 |
| Comparative Example 8 | 10 | 290 | 10 | 30 | 85 |
| Example 8 | 20 | 280 | 10 | 30 | 87 |
| Example 9 | 50 | 250 | 10 | 30 | 90 |
| Example 10 | 100 | 200 | 10 | 30 | 91 |
| Example 11 | 300 | 0 | 10 | 30 | 92 |
| Comparative Example 9 | 0 | 300 | 15 | 30 | 30 |
| Comparative Example 10 | 10 | 290 | 15 | 30 | 81 |
| Example 12 | 20 | 280 | 15 | 30 | 85 |
| Example 13 | 50 | 250 | 15 | 30 | 87 |
| Example 14 | 100 | 200 | 15 | 30 | 90 |
| Example 15 | 300 | 0 | 15 | 30 | 91 |

(Example 9)

A honeycomb filter (Example 9) was prepared by a method similar to that of Example 8 except that a thickness of a trapping layer was set to 50 μm and a thickness of a support layer was set to 250 μm. An average pore diameter and an initial trapping efficiency (the trapping efficiency) during an exhaust gas treatment were measured in the same manner as in Example 1. Results are shown in Table 2.

(Example 10)

A honeycomb filter (Example 10) was prepared by a method similar to that of Example 8 except that a thickness of a trapping layer was set to 100 $\mu$m and a thickness of a support layer was set to 200 $\mu$m. An average pore diameter and an initial trapping efficiency (the trapping efficiency) during an exhaust gas treatment were measured in the same manner as in Example 1. Results are shown in Table 2.

(Example 11)
A honeycomb filter (Example 11) was prepared by a method similar to that of Example 8 except that a thickness of a trapping layer was set to 300 $\mu$m and a thickness of a support layer was set to 0 $\mu$m (each partition wall was constituted of one trapping layer). An average pore diameter and an initial trapping efficiency (the trapping efficiency) during an exhaust gas treatment were measured in the same manner as in Example 1. Results are shown in Table 2.

(Example 12)
A honeycomb filter (Example 12) was prepared by a method similar to that of Example 8 except that an average pore diameter of a trapping layer was set to 15 $\mu$m. An average pore diameter and an initial trapping efficiency (the trapping efficiency) during an exhaust gas treatment were measured in the same manner as in Example 1. Results are shown in Table 2.

(Example 13)
A honeycomb filter (Example 13) was prepared by a method similar to that of Example 12 except that a thickness of a trapping layer was set to 50 $\mu$m and a thickness of a support layer was set to 250 $\mu$m. An average pore diameter and an initial trapping efficiency (the trapping efficiency) during an exhaust gas treatment were measured in the same manner as in Example 1. Results are shown in Table 2.

(Example 14)
A honeycomb filter (Example 14) was prepared by a method similar to that of Example 12 except that a thickness of a trapping layer was set to 100 $\mu$m and a thickness of a support layer was set to 200 $\mu$m. An average pore diameter and an initial trapping efficiency (the trapping efficiency) during an exhaust gas treatment were measured in the same manner as in Example 1. Results are shown in Table 2.

(Example 15)
A honeycomb filter (Example 15) was prepared by a method similar to that of Example 12 except that a thickness of a trapping layer was set to 300 $\mu$m and a thickness of a support layer was set to 0 $\mu$m (each partition wall was constituted of one trapping layer). An average pore diameter and an initial trapping efficiency (the trapping efficiency) during an exhaust gas treatment were measured in the same manner as in Example 1. Results are shown in Table 2.

(Comparative Example 7)
A honeycomb filter (Comparative Example 7) was prepared by a method similar to that of Example 8 except that a thickness of a trapping layer was set to 0 $\mu$m and a thickness of a support layer was set to 300 $\mu$m (each partition wall was constituted of one support layer). An average pore diameter and an initial trapping efficiency (the trapping efficiency) during an exhaust gas treatment were measured in the same manner as in Example 1. Results are shown in Table 2.

(Comparative Example 8)
A honeycomb filter (Comparative Example 8) was prepared by a method similar to that of Example 8 except that a thickness of a trapping layer was set to 10 $\mu$m and a thickness of a support layer was set to 290 $\mu$m. An average pore diameter and an initial trapping efficiency (the trapping efficiency) during an exhaust gas treatment were measured in the same manner as in Example 1. Results are shown in Table 2.

(Comparative Example 9)
A honeycomb filter (Comparative Example 9) was prepared by a method similar to that of Example 12 except that a thickness of a trapping layer was set to 0 $\mu$m and a thickness of a support layer was set to 300 $\mu$m (each partition wall was constituted of one support layer). An average pore diameter and an initial trapping efficiency (the trapping efficiency) during an exhaust gas treatment were measured in the same manner as in Example 1. Results are shown in Table 2.

(Comparative Example 10)
A honeycomb filter (Comparative Example 10) was prepared by a method similar to that of Example 12 except that a thickness of a trapping layer was set to 10 $\mu$m and a thickness of a support layer was set to 290 $\mu$m. An average pore diameter and an initial trapping efficiency (the trapping efficiency) during an exhaust gas treatment were measured in the same manner as in Example 1. Results are shown in Table 2.

It is seen from Table 2 that when the thickness of the trapping layer is 20 $\mu$m or more, the honeycomb filter having an excellent trapping efficiency can be obtained.

A honeycomb filter of the present invention is usable in removing particulate matters from an exhaust gas discharged from combustion devices including internal combustion engines such as an engine for a car, an engine for a construction machine and a fixed engine for an industrial machine.

**Claims**

1. A honeycomb filter which comprises:

   porous partition walls to define and form a plurality of cells constituting channels of a fluid and in which the predetermined cells each opened at one end thereof and plugged at the other end thereof and the remaining cells each plugged at one end thereof and opened at the other end thereof are alternately arranged,

   wherein an average pore diameter of the partition walls is in a range of 8 to 18 $\mu$m, and a standard deviation in terms of common logarithm in pore diameter distribution, when pore diameters are expressed in terms of common logarithm, is in a range of 0.2 to 0.5.

2. The honeycomb filter according to claim 1,
   wherein the average pore diameter in terms of common logarithm is in a range of 10 to 16 $\mu$m, and the standard deviation is in a range of 0.2 to 0.5.

3. The honeycomb filter according to claim 1 or 2,
   wherein a material constituting the partition walls is at least one selected from the group consisting of cordierite, silicon carbide, sialon, mullite, silicon nitride, zirconium phosphate, zirconia, titania, alumina and silica.

4. A honeycomb filter which comprises:

   porous partition walls to define and form a plurality of cells constituting channels of a fluid and in which the predetermined cells each opened at one end thereof and plugged at the other end thereof and the remaining cells each plugged at one end thereof and opened at the other end thereof are alternately arranged,

   wherein a thickness of each of the partition walls exceeds 20 $\mu$m,
   the partition wall is constituted of two layers, one (a trapping layer) of the layers has a thickness of 20 $\mu$m or more, an average pore diameter of the trapping layers is in a range of 8 to 18 $\mu$m, and a standard deviation in terms of common logarithm in pore diameter distribution, when pore diameters are expressed in terms of common logarithm, is in a range of 0.2 to 0.5.

5. The honeycomb filter according to claim 4,
   wherein the other layer (a support layer) of the partition wall has an average pore diameter of 20 $\mu$m or more.

EP 1 842 578 A2

FIG.1

FIG.2

14

FIG.3

COMMON LOGARITHM STANDARD DEVIATION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2726616 B

- JP 3272746 B